# EUROPEAN PATENT SPECIFICATION

(11) **EP 2 386 039 B1**
(45) Date of publication and mention of the grant of the patent: **18.12.2013**
(21) Application number: 10774179.5
(22) Date of filing: 26.10.2010
(51) Int. Cl.: F16L 11/22, F16L 59/14, F16L 59/153, F24J 2/46, F16L 11/12

(54) **MULTILAYER TUBE FOR HYDRAULIC CONNECTION AND WIRING OF SOLAR PANELS**
MEHRSCHICHTIGES ROHR ZUR HYDRAULISCHEN VERBINDUNG UND VERKABELUNG VON SOLARPANEELEN
TUBE MULTICOUCHE UTILISÉ POUR LE RACCORD ET LE CÂBLAGE HYDRAULIQUES DE PANNEAUX SOLAIRES

(30) Priority: 28.10.2009 IT PD20090316
(43) Date of publication of application: 16.11.2011
(73) Proprietor: Everlux S.r.l., 35138 Padova (IT)
(72) Inventor: TOGNON, Francesco, 35129 Padova (IT)
(74) Representative: Modiano, Micaela Nadia
(86) International application number: PCT/EP2010/066124
(87) International publication number: WO 2011/051262

(56) References cited:
- EP-A1- 1 707 897
- DE-U1- 20 009 556
- DE-U1- 20 103 677
- US-A1- 2007 102 055

## Description

### Technical field

The present invention relates to a multilayer tube for hydraulic connection and wiring of solar panels.

### Background Art

Currently, in order to install a solar panel of the thermal type, i.e., dedicated to the heating of water intended for example for a home, one proceeds, after laying the panels, with the provision of the hydraulic and electrical connections.

The one or more fitted solar panels must be reached by a supply duct for the water to be heated and by a return duct for such water heated by passing through the one or more panels and, in the case for example of solar power systems with forced circulation, by an electrical connection for a probe for detecting the temperature of the water at the panel manifolds.

Such a complex installation is costly both in terms of time, since each duct and the wiring cable each require a dedicated path with a dedicated seat or chase or in any case must be laid each independently of the other, and in terms of space occupation, since according to currently applicable statutory provisions each duct for heat transfer fluids must be insulated thermally with layers of insulation which, in order to ensure the required performance, cause the individual duct to produce a diametrical space occupation of more than six centimeters.

DE-U-200 09 556 discloses an insulated double pipe for connection of solar panels to a solar storage tank, comprising two copper pipes each surrounded by insulation, and electrical conductor cables, all held together by a sheath, whereby the pipes with their insultation are arranged in mutual contact and the electrical conductor cables are positioned in a space defined inside the sheath.

### Disclosure of the Invention

The aim of the present invention is to provide a multilayer tube for hydraulic connection and wiring of solar panels by means of which it is possible to connect hydraulically one or more solar panels quickly and with an extremely small space occupation that is far lower than the space occupation required by known means.

Within this aim, an object of the invention is to provide a multilayer tube compliant with applicable statutory provisions and whose performance and efficiency are not inferior to those of currently known thermally insulated tubes.

Another object of the invention is to provide a multilayer tube that can be curved with bending radiuses that are not disadvantageous with respect to the minimum radiuses that can be obtained with known thermally insulated tubes.

Another object of the invention is to propose a multilayer tube that is structurally simple and easy to use and can be manufactured at low costs.

In accordance with the invention, there is provided a multilayer tube for hydraulic connection and wiring of solar panels, as defined in the appended independent claim. Preferred features of the invention are defined in the dependent claims.

### Brief description of the drawings

Further characteristics and advantages of the invention will become better apparent from the following detailed description of a preferred but not exclusive embodiment of the multilayer tube according to the invention, illustrated by way of non-limiting example in the accompanying drawings, wherein:

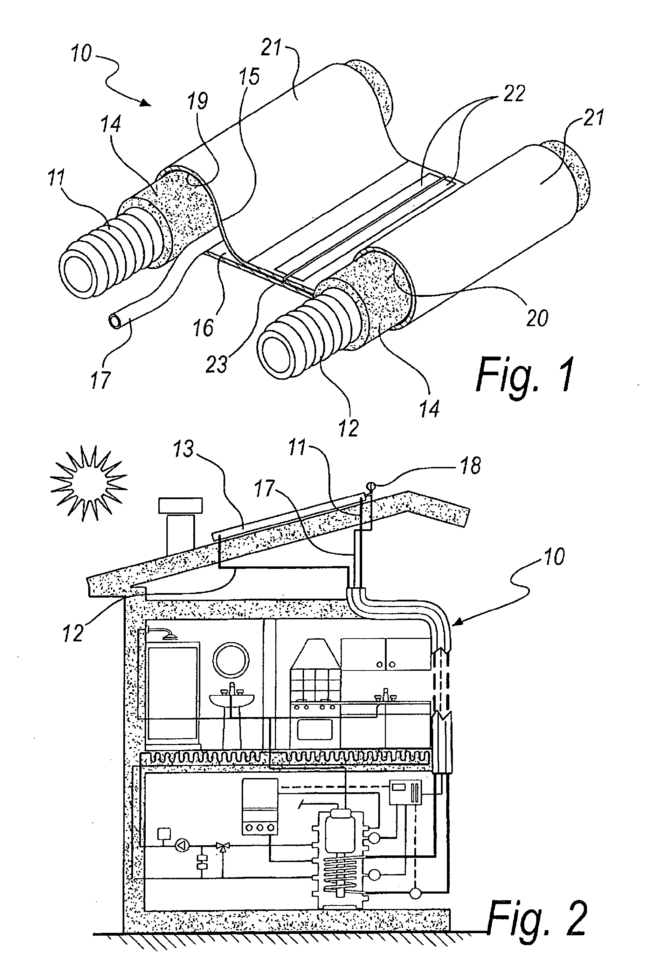

Figure 1 is a perspective view of a portion of a multilayer tube according to the invention;
Figure 2 is a schematic view of an application of the multilayer tube according to the invention.

### Ways of carrying out the Invention

With reference to the figures, a multilayer tube for the hydraulic connection and wiring of solar panels is generally designated by the reference numeral 10.

The multilayer tube 10 comprises, in the embodiment described here by way of non-limiting example of the invention,
- two tubes, a delivery tube 11 and a return tube 12, for a heat transfer fluid designed to circulate in at least one solar panel 13 with which the multilayer tube 10 is associated; the tubes 11 and 12 are substantially parallel, i.e., run along parallel paths;
- a thermal insulating layer 14 based on Aerogel, arranged so as to wrap around each one of the tubes 11 and 12,
- a protection and containment sheath 15, which is arranged so as to surround both of the tubes 11 and 12 with the insulating layer 14 made of Aerogel; the sheath 15 is contoured so as to form a longitudinal containment channel 16 for at least one electrical wiring cable 17, for example for a temperature probe 18 associated with the solar panel 13.

The multilayer tube 10 according to the invention can be wound in a spool and can be palletized easily and cheaply with an advantageous reduction of packaging bulk.

The multilayer tube 10 can be provided with the two tubes 11 and 12 that have a center distance comprised between 5 and 20 centimeters according to the requirements and needs.

The tubes 11 and 12 are made of steel, preferably of the corrugated type, but not exclusively.

The tubes 11 and 12 have an average cross-section with a diameter comprised between 1.5 and 4 centimeters, in this case also according to the requirements and particularities in application.

The insulating layer 14 made of Aerogel has a thickness comprised between 0.3 centimeters and 2 centimeters.

These dimensions reduce considerably the overall space occupation of each tube with insulating layer with respect to known thermally insulated tubes.

The protection and containment sheath 15 is made of coated fabric, with normal or braided pull-resistant warp.

The sheath 15 is contoured so as to form two lateral tubular channels 19 and 20, one for each one of the tubes 11 and 12 wrapped in the insulating layer 14.

Each channel 19 and 20 is constituted by the folding of a flap 21 so as to surround a corresponding tube, the edge 22 of the flap being fixed to a central region 23 of such sheath by adhesive bonding or by high-frequency welding or by means of other similar and equivalent methods.

In a further embodiment of the multilayer tube according to the invention, the sheath 15 is constituted by a sheet made of metallic material, whose flaps are folded so as to surround a corresponding tube, the edge of such flap being fixed to a central region of such sheath by spot welding.

In practice it has been found that the invention achieves the intended aim and objects.

In particular, the invention provides a multilayer tube for hydraulic connection and wiring of solar panels by means of which it is possible to connect hydraulically one or more solar panels quickly and with extremely reduced space occupations, far smaller than the space occupations imposed by known means.

Further, the invention provides a multilayer tube that is compliant with applicable statutory provisions and whose performance and efficiency are not inferior to those of currently known thermally insulated tubes.

Moreover, the invention provides a multilayer tube that can be curved with bending radiuses that are not disadvantageous with respect to the minimum radiuses that can be obtained with known thermally insulated tubes.

Not least, the invention has proposed a multilayer tube that is structurally simple and easy to use and can be manufactured at low costs.

The invention thus conceived is susceptible of numerous modifications and variations, as long as they are within the scope of the appended claims;
e.g. the materials used, as well as the contingent shapes and dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A multilayer tube (10) for the hydraulic connection and wiring of solar panels, comprising
- at least two tubes (11, 12), one for delivery and one for return, for a heat transfer fluid designed to circulate in at least one solar panel (13) with which the multilayer tube is associated, said tubes being extended along parallel paths,
- at least one thermal insulation layer (14), arranged so as to wrap around each tube (11, 12),
- a protection and containment sheath (15), which is arranged so as to surround all of said tubes (11, 12) with said insulating layer (14), said sheath being contoured so as to form a longitudinal containment channel (16) for at least one electrical wiring cable (17),
the multilayer tube (10) being **characterized in that**
- said insulation layer (14) is made of Aerogel, and
- said sheath (15) is contoured so as to form two lateral mutually separate tubular channels (19, 20), one for each one of the tubes (11, 12) wrapped in said Aerogel insulating layer (14).

2. The multilayer tube according to claim 1, **characterized in that** it can be wound in a coil.

3. The multilayer tube according to the preceding claims, **characterized in that** the center distance between the two tubes (11, 12) is comprised between 5 and 20 centimeters.

4. The multilayer tube according to the preceding claims, **characterized in that** said tubes (11, 12) are made of steel, of the corrugated type, with an average cross-section whose diameter is comprised between 1.5 and 4 centimeters.

5. The multilayer tube according to the preceding claims, **characterized in that** said insulating layer made of Aerogel (14) has a thickness comprised between 0.3 centimeters and 2 centimeters.

6. The multilayer tube according to the preceding claims, **characterized in that** said protection and containment sheath (15) is made of coated fabric, with normal or braided pull-resistant warp.

7. The multilayer tube according to claim 6, **characterized in that** each channel (19, 20) is constituted by the folding of a flap (21) so as to surround a corresponding tube, the edge (22) of said flap being fixed to a central region (23) of said sheath by adhesive bonding or by high-frequency welding or by means of other similar and equivalent methods.

8. The multilayer tube according to claims 1 to 5, **characterized in that** said sheath is constituted by a sheet made of metallic material, whose flaps are folded so as to surround a corresponding tube, the edge of said flap being fixed to a central region of said sheath by spot welding.

## Patentansprüche

1. Ein Mehrschichtrohr (10) für die hydraulische Verbindung und Verdrahtung von Solarpanelen umfassend
- wenigstens zwei Rohre (11, 12), eines zum Zufluss und eines zum Rückfluss eines Wärmeübertragungsfluids, welches dazu bestimmt ist in wenigstens einem Solarpanel (13), mit welchem das Mehrschichtrohr verbunden ist, zu zirkulieren, wobei die Rohre entlang paralleler Bahnen ausgedehnt sind,
- wenigstens eine thermische Isolierungsschicht (14), welche so angeordnet ist, dass sie jedes Rohr (11, 12) umhüllt,
- ein Schutz- und Hüllmantel (15), welcher so angeordnet ist, dass er die Rohre (11, 12) mit der Isolierungsschicht (14) vollständig umschließt, wobei der Mantel so konturiert ist, dass er einen längslaufenden Kanal (16) für wenigstens ein Verdrahtungskabel (17) bildet,
wobei das Mehrschichtrohr (10) **dadurch gekennzeichnet ist, dass**
- die Isolationsschicht (14) aus Aerogel hergestellt ist, und
- der Mantel (15) so konturiert ist, dass zwei laterale, gegenseitig getrennte Rohrkanäle (19, 20) gebildet werden, einer für jedes der Rohre (11, 12), welche in der Aerogel-Isolierungsschicht (14) eingehüllt sind.

2. Mehrschichtrohr gemäß Anspruch 1, **dadurch gekennzeichnet, dass** es zu einer Spule gewickelt werden kann.

3. Mehrschichtrohr gemäß den vorstehenden Ansprüchen, **dadurch gekennzeichnet, dass** der Mittelpunktsabstand zwischen den zwei Rohren (11, 12) zwischen 5 und 20 Zentimeter umfasst.

4. Mehrschichtrohr gemäß den vorstehenden Ansprüchen, **dadurch gekennzeichnet, dass** die Rohre (11, 12) aus Stahl des gewellten Typs, mit einem Querschnitt dessen Durchmesser zwischen 1,5 und 4 Zentimeter umfasst, hergestellt sind.

5. Mehrschichtrohr gemäß den vorstehenden Ansprüchen, **dadurch gekennzeichnet, dass** die Isolierungsschicht, die aus Aerogel (14) hergestellt ist, eine zwischen 0,3 Zentimetern und 2 Zentimetern umfassende Dicke besitzt.

6. Mehrschichtrohr gemäß den vorstehenden Ansprüchen, **dadurch gekennzeichnet, dass** der Schutz- und Hüllmantel (15) aus beschichtetem Gewebe mit gewöhnlicher oder geflochtener, zugbeständiger Kette hergestellt ist.

7. Mehrschichtrohr gemäß Anspruch 6, **dadurch gekennzeichnet, dass** jeder Kanal (19, 20) durch das Falten einer Lasche (21) so gebildet ist, dass ein entsprechendes Rohr umschlossen wird, wobei das Ende (22) der Lasche im Mittelbereich (23) der Hülle durch Klebeverbinden oder Hochfrequenzschweißen oder mittels anderer gleichartiger und äquivalenter Verfahren befestigt ist.

8. Mehrschichtrohr gemäß den Ansprüchen 1 bis 5, **dadurch gekennzeichnet, dass** die Hülle von einer Folie, hergestellt aus einem metallischen Material, gebildet ist, deren Laschen so gefaltet sind, dass ein entsprechendes Rohr umschlossen wird, wobei das Ende der Lasche in einem Mittelbereich der Hülle durch Punktschweißen befestigt ist.

## Revendications

1. Tube multicouche (10) pour la liaison hydraulique et le câblage de panneaux solaires, comprenant :
- au moins deux tubes (11, 12), l'un pour la délivrance et l'autre pour le retour, pour un fluide de transfert de chaleur conçu pour circuler dans au moins un panneau solaire (13) auquel est associé le tube multicouche, lesdits tubes s'étendant le long de trajets parallèles,
- au moins une couche d'isolement thermique (14), disposée de façon à s'enrouler autour de chaque tube (11, 12),
- un manchon de protection et de confinement (15), qui est agencé de façon à entourer la totalité desdits tubes (11, 12) avec ladite couche isolante (14), ledit manchon ayant un certain contour, de façon à former un canal de confinement longitudinal (16) pour au moins un câble de câblage électrique (17),
le tube multicouche (10) étant **caractérisé en ce que** :
- ladite couche d'isolement (14) est réalisée en aérogel, et
- ledit manchon (15) a un certain contour, de façon à former deux canaux tubulaires mutuellement séparés latéraux (19, 20), l'un pour chacun des tubes (11, 12) enveloppés dans ladite couche d'isolement en aérogel (14).

2. Tube multicouche selon la revendication 1, **caractérisé en ce qu'**il peut être enroulé sous la forme d'un serpentin.

3. Tube multicouche selon les revendications précédentes, **caractérisé en ce que** la distance centrale entre les deux tubes (11, 12) est comprise entre 5 et 20 centimètres.

4. Tube multicouche selon les revendications précédentes, **caractérisé en ce que** lesdits tubes (11, 12) sont réalisés en acier, du type ondulé, avec une section transversale moyenne dont le diamètre est compris entre 1,5 et 4 centimètres.

5. Tube multicouche selon les revendications précédentes, caractérisé en ce ladite couche isolante réalisée en aérogel (14) a une épaisseur comprise entre 0,3 centimètres et 2 centimètres.

6. Tube multicouche selon les revendications précédentes, **caractérisé en ce que** ledit manchon de protection et de confinement (15) est réalisé en tissu revêtu, avec une chaîne résistant à la traction normale ou tressée.

7. Tube multicouche selon la revendication 6, **caractérisé en ce que** chaque canal (19, 20) est constitué par le pliage d'un volet (21) de façon à entourer un tube correspondant, le bord (22) dudit volet étant fixé à une région centrale (23) dudit manchon par liaison adhésive ou par soudage à haute fréquence, ou à l'aide d'autres procédés similaires et équivalents.

8. Tube multicouche selon les revendications 1 à 5, **caractérisé en ce que** ledit manchon est constitué par une feuille réalisée en un matériau métallique, dont des volets sont pliés de façon à entourer un tube correspondant, le bord dudit volet étant fixé à une région centrale dudit manchon par soudage par points.
